# EUROPÄISCHE PATENTANMELDUNG

(11) **EP 3 211 576 A1**
(43) Veröffentlichungstag der Anmeldung: **30.08.2017**
(21) Anmeldenummer: 17158018.6
(22) Anmeldetag: 26.02.2017
(51) Int. Cl.: G06Q 10/08, G06Q 30/06, G07G 1/00, G06Q 20/32, G06Q 20/20

(54) **SYSTEM UND VERFAHREN ZUM AUSWÄHLEN UND ELEKTRONISCHEN BEZAHLEN VON PRODUKTEN DES EINZELHANDELS SOWIE BENUTZERENDGERÄT ZUR VERWENDUNG IN EINEM SOLCHEN SYSTEM ODER VERFAHREN**

(30) Priorität: 29.02.2016 DE 102016203241
(71) Anmelder: Xioni AG, 9487 Bendern (LI)
(72) Erfinder: HEINEN, Daniel, 48161 Münster (DE)
(74) Vertreter: Werner & ten Brink

(57) **Zusammenfassung**

Die Erfindung ist ein System (10) und ein Verfahren zum Auswählen und elektronischen Bezahlen von Produkten (12) des Einzelhandels, wobei das System (10) eine Datenbasis (16) mit Daten bezüglich einer Vielzahl von Einzelhandelsprodukten (12) umfasst und mit dem System eine Mehrzahl von Benutzerendgeräten (18a, 18b) kommunikativ verbindbar ist. Mittels eines Benutzerendgeräts (18a, 18b) wird eine Warenkennzeichnung (20) eines Einzelhandelsprodukts (12) erfasst. Die erfasste Warenkennzeichnung (20) wird mittels des Benutzerendgeräts (18a, 18b) an die Datenbasis (16) übermittelt, woraufhin an das Benutzerendgerät (18a, 18b) zu der Warenkennzeichnung (20) passende Produktdaten (24) übermittelt werden. Das jeweilige Einzelhandelsprodukt (12) wird anhand der empfangenen Produktdaten (24) mittels einer oder mehrerer an dem Benutzerendgerät (18a, 18b) vorgenommener Bedienhandlungen konfiguriert. Dabei werden entsprechend einer jeweiligen Konfiguration Konfigurationsdaten (26) generiert. Abschließend wird mittels des Benutzerendgeräts (18a, 18b) aufgrund einer an dem Benutzerendgerät (18a, 18b) vorgenommenen Bedienhandlung eine elektronische Bezahlung des jeweiligen Einzelhandelsprodukts (12) in der jeweils konfigurierten Ausführungsform entsprechend der Konfigurationsdaten (26) ausgelöst.

## Beschreibung

Die Erfindung betrifft zuvorderst ein System zum Auswählen und elektronischen Bezahlen von Produkten des Einzelhandels. Im Weiteren betrifft die Erfindung ein Verfahren zum Betrieb oder zur Verwendung eines solchen Systems. Schließlich betrifft die Erfindung auch ein Benutzerendgerät zur Verwendung in einem solchen System oder Verfahren.

Ein Erwerb von Produkten des Einzelhandels über Internet und ein dabei zur Anwendung kommendes System, nämlich einerseits ein vom Kunden verwendeter Computer und andererseits ein Computersystem des jeweiligen Dienstleisters, mit welchem sich der Kunde mittels seines Computers über Internet verbindet, sind an sich bekannt. Bekannt ist im Falle eines direkten Erwerbs eines Einzelhandelsprodukts in einem Einzelhandelsgeschäft auch, dass mittels eines leistungsfähigen Kassensystems eine Warenkennzeichnung eines zu erwerbenden Einzelhandelsprodukts erfassbar ist und dass sich aus der Warenkennzeichnung der jeweilige Endpreis des Produkts ergibt und dass im Falle eines Kaufs anhand der Warenkennzeichnung das erworbene Produkt aus dem Warenbestand ausgebucht wird, so dass der Kunde das Verkaufsgeschäft verlassen kann, ohne dass eine zum Verhindern von Diebstahl vorgesehene Sicherungseinrichtung anspricht.

Eine Aufgabe der vorliegenden Erfindung besteht darin, den Erwerb eines Einzelhandelsprodukts für den Kunden weiter zu vereinfachen und dem Kunden im Zusammenhang mit der Auswahl eines Einzelhandelsprodukts weitere, bisher nicht bekannte Möglichkeiten anzubieten.

Diese Aufgabe wird erfindungsgemäß mittels eines Systems mit den Merkmalen des Anspruchs 1 gelöst. Bei einem solchen System zum Auswählen und elektronischen Bezahlen von Produkten des Einzelhandels ist gemäß der hier vorgeschlagenen Neuerung Folgendes vorgesehen:

Das System umfasst eine ggf. auch verteilte lokale oder entfernte Datenbasis mit Daten bezüglich einer Vielzahl von Einzelhandelsprodukten. Es handelt sich also zum Beispiel um eine lokale Datenbasis eines Einzelhandelsgeschäfts auf einem am Ort des Einzelhandelsgeschäfts installierten Computersystem oder eine entfernte Datenbasis des Einzelhandelsgeschäfts auf einem zum Beispiel von einem Dienstleister zur Verfügung gestellten Computersystem. Genauso kann es sich um eine Datenbasis handeln, auf die mehrere Filialen eines Unternehmens Zugriff haben. Diese kann sich bezüglich einer Filiale lokal auf einem am Ort der Filiale installierten Computersystem befinden. Für die anderen Filialen handelt es sich entsprechend um eine entfernte Datenbasis. Genauso kann die Datenbasis als für alle Filialen entfernte Datenbasis auf einem Computersystem des Unternehmens oder eines Dienstleisters installiert sein. Für alle bisher beschriebenen Szenarien gilt als weitere Alternative, dass die Datenbasis als über Internet erreichbare Datenbasis in der sogenannten Cloud abgelegt ist.

Mit dem System ist zumindest ein Benutzerendgerät, üblicherweise aber eine Mehrzahl von Benutzerendgeräten, kommunikativ verbindbar. Bei einem ersten Benutzerendgerätetyp kommt eine leitungsgebundene kommunikative Verbindung mit dem System in Betracht. Bei einem solchen Benutzerendgerätetyp handelt es sich zum Beispiel um ein in einem Einzelhandelsgeschäft platzierbares Terminal. Bei einem zweiten Benutzerendgerätetyp kommt eine leitungslose kommunikative Verbindung mit dem System in Betracht. Bei einem solchen Benutzerendgerätetyp handelt es sich zum Beispiel um ein von einem Kunden (Benutzer) mitführbares Smartphone oder dergleichen.

Mittels eines Benutzerendgeräts, also entweder mittels eines mit dem System dauerhaft oder zumindest für einen längeren Zeitraum verbundenen Geräts, wie zum Beispiel einem Terminal, oder mittels eines mit dem System temporär verbundenen Geräts, wie zum Beispiel einem Smartphone, ist eine Warenkennzeichnung eines den Kunden interessierenden Einzelhandelsprodukts - zum Beispiel eine Bluse - erfassbar und wird beim Betrieb des Systems erfasst. Dies erfolgt zum Beispiel durch grundsätzlich an sich bekanntes Scannen eines Barcodes, Auslesen einer Kennung eines RFID-Transponders oder dergleichen. Zu den erfassbaren Barcode-Typen gehören insbesondere UCC/EAN 128, EAN 13, EAN 8, UPC A, UPC E, UPC E1, Code 11, Code 39, Code 93, Code 128, GS1, Matrix 2 to 5, Code 11, 2 of 5 industrial, 2 of 5 interleaved, Codebar, MSI/Plessey, K/Plessey, IATA,ISBN, ISMN, ISSN, S-code, Telepen, RSS 14, RSS Limited, RSS-Expanded, PDF417, Data Matrix, QR code und Maxi code. Je nach konkreter Ausführungsform des Benutzerendgeräts, zum Beispiel abhängig vom Funktionsumfang einer zur Auswertung einzelner oder mehrerer Barcode-Typen installierten Software, kann dieses einzelne der genannten Barcode-Typen, Gruppen der genannten Barcode-Typen oder alle genannten Barcode-Typen verarbeiten. Hinsichtlich des Auslesens einer Kennung eines RFID-Transponders vermag das Benutzerendgerät, zum Beispiel abhängig vom Funktionsumfang einer insoweit installierten Software, insbesondere einzelne, Gruppe oder alle nachfolgenden Karten und deren Daten zu lesen: ISO 14443, ISO 15693, MIFARE MINI, MIFARE CLASSIC-1 K / CLASSIC-4K, MIFARE ULTRALIGHT / ULTRALIGHT-C, MIFARE PLUS 2K/4K und MIFARE DESFire.

Die erfasste Warenkennzeichnung ist mittels des Benutzerendgeräts an die Datenbasis übermittelbar und wird beim Betrieb des Systems mittels des Benutzerendgeräts an die Datenbasis übermittelt, woraufhin als Antwort auf die Übermittlung der erfassten Warenkennzeichnung an das Benutzerendgerät Produktdaten bezüglich des den Kunden interessierenden Einzelhandelsprodukts übermittelbar sind und beim Betrieb des Systems übermittelt werden. Bei einer Bluse sind als Beispiel für derartige Produktdaten zum Beispiel unterschiedliche Konfektionsgrößen oder unterschiedliche Farben, in denen die Bluse erhältlich ist, zu nennen.

Daraufhin ist das Einzelhandelsprodukt, dessen Warenkennzeichnung erfasst wurde, anhand der empfangenen Produktdaten mittels einer oder mehrerer an dem Benutzerendgerät vorgenommener Bedienhandlungen konfigurierbar und wird bei Bedarf durch den Benutzer mittels des Benutzerendgeräts konfiguriert. Entsprechend einer jeweiligen Konfiguration sind Konfigurationsdaten generierbar und werden beim Betrieb des Systems generiert. Bei einer zum Beispiel roten Bluse, deren Warenkennzeichnung erfasst wurde, besteht die Konfigurationsmöglichkeit zum Beispiel darin, dass anstelle der Bluse in Rot diese auch in einer anderen Farbe auswählbar ist. Das Ergebnis einer solchen Konfiguration sind Konfigurationsdaten, welche die ursprünglich ausgewählte Bluse beschreiben und zusätzlich die gemäß der geänderten Konfiguration ausgewählte Farbe codieren.

Wenn auf diese Weise der Kunde seine Auswahl abgeschlossen hat, ist mittels des Benutzerendgeräts aufgrund einer an dem Benutzerendgerät vorgenommenen Bedienhandlung eine elektronische Bezahlung des jeweiligen Einzelhandelsprodukts in der jeweils konfigurierten Ausführungsform entsprechend der Konfigurationsdaten auslösbar und wird beim Betrieb des Systems ausgelöst.

Der Vorteil der Erfindung besteht darin, dass der Prozess des Erwerbs eines Einzelhandelsprodukts, zum Beispiel einer Bluse, für den jeweiligen Kunden deutlich vereinfacht ist. Der Kunde braucht in einem jeweiligen Einzelhandelsgeschäft im Grunde nur ein seinen Wünschen zum Teil entsprechendes oder im Wesentlichen entsprechendes Produkt auswählen und erhält anhand der jeweils erfassten Warenkennzeichnung automatisch weitere Informationen zu dem jeweiligen Produkt, zum Beispiel ob dieses auch in anderen Konfektionsgrößen und/oder in anderen Farben erhältlich ist, wobei sich die Erhältlichkeit auf die Verfügbarkeit in dem jeweiligen Einzelhandelsgeschäft, aber auch auf die generelle Verfügbarkeit, also unabhängig vom Lagerbestand des jeweiligen Einzelhandelsgeschäfts, beziehen kann. Der Kunde kann auf Basis solcher Zusatzinformationen das ihn jeweils interessierende Produkt genauer spezifizieren. Dieses genauere Spezifizieren des jeweiligen Produkts wird hier und im Folgenden als Konfiguration des Produkts bezeichnet und im Rahmen einer solchen Konfiguration kann der Kunde zum Beispiel das jeweilige Produkt in einer anderen Farbe auswählen. Wenn der Kunde schließlich mit seiner Auswahl zufrieden ist, kann dieser unmittelbar eine elektronische Bezahlung des jeweiligen Produkts in der jeweils konfigurierten Ausführungsform auslösen.

Ein mögliches Szenario beim Erwerb eines Einzelhandelsprodukts, zum Beispiel einer Bluse, kann demnach wie folgt aussehen: Einer Kundin fällt eine grundsätzlich infrage kommende Bluse in roter Farbe auf. Sie erfasst mittels eines Benutzerendgeräts, zum Beispiel mittels ihres Smartphones, deren Warenkennzeichnung und erhält auf deren Grundlage als Produktdaten weitere Informationen zu der Bluse, zum Beispiel die Information, dass die Bluse auch in anderen Farben erhältlich ist. Die Kundin wählt eine andere Farbe aus (Konfiguration), ohne dafür nochmals an die Verkaufsregale oder Warenständer herantreten und dort suchen zu müssen. Wenn der Kundin die Auswahl gefällt, kann sie anschließend die elektronische Bezahlung der Bluse in der ausgewählten Farbe veranlassen und braucht dafür weder ein Kassenterminal aufzusuchen noch sich dort in eine etwaige Warteschlange einzureihen. Die Kundin kann sogar entscheiden, ob sie die ausgewählte Bluse unmittelbar mitnehmen möchte oder ob ihr diese zugeschickt werden soll.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene System auch entsprechend der Verfahrensansprüche weitergebildet sein kann und umgekehrt.

Die mit der Anmeldung eingereichten Ansprüche sind Formulierungsvorschläge ohne Präjudiz für die Erzielung weitergehenden Schutzes. Da speziell die Gegenstände der Unteransprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Bei einer Ausführungsform des Systems ist vorteilhaft im Zusammenhang mit der Auslösung der elektronischen Bezahlung des jeweiligen Einzelhandelsprodukts dieses in der Datenbasis oder einer mit der Datenbasis verbundenen weiteren Datenbasis als bezahlt markierbar und wird beim Betrieb des Systems als bezahlt markiert. Die Markierung eines gekauften Produkts als bezahlt erfolgt bisher im Zusammenhang mit einem Bezahlvorgang an einem Kassensystem. Dabei bucht das Kassensystem das gekaufte Produkt gewissermaßen aus dem Warenbestand aus. Im Ergebnis kann der Käufer mit der gekauften Ware beim Verlassen des Geschäfts eine Kontrollstation passieren, ohne dass ein Alarm ausgelöst wird, wie dies ansonsten bei einem Diebstahlversuch oder dergleichen der Fall wäre. Indem bei dem hier vorgeschlagenen System und dem Verfahren zu dessen Betrieb im Zusammenhang mit der Auslösung der elektronischen Bezahlung des jeweiligen Einzelhandelsprodukts dessen entsprechende Markierung im Warenbestand des jeweiligen Verkaufsgeschäfts erfolgt (Markierung als bezahlt), ist der Bezahlvorgang für den Kunden vollständig abgeschlossen und der Kunde kann mit der gekauften Ware unmittelbar das Verkaufsgeschäft verlassen. Bei der Datenbasis, in welcher die Markierung des gekauften Einzelhandelsprodukts im Warenbestand als bezahlt erfolgt, kann es sich um die eingangs erwähnte Datenbasis handeln, aus welcher beispielsweise die Produktdaten stammen. Alternativ kann es sich auch um eine mit dieser Datenbasis verbundene weitere Datenbasis handeln, zum Beispiel eine Datenbasis, welche ausschließlich oder vornehmlich zur Überwachung des Warenbestands vorgesehen ist.

Bei einer weiteren Ausführungsform des Systems ist mittels des Benutzerendgeräts eine Anzeigeeinheit ansteuerbar, wobei mittels der Anzeigeeinheit und unter Kontrolle des Benutzerendgeräts sowie auf Basis der Konfigurationsdaten eine Darstellung des jeweiligen Einzelhandelsprodukts in der jeweils konfigurierten Ausführungsform entsprechend der Konfigurationsdaten anzeigbar ist. Beim Betrieb des Systems wird eine solche Anzeigeeinheit mittels des Benutzerendgeräts angesteuert. Bei der Anzeigeeinheit kann es sich um eine von dem Benutzerendgerät umfasste Anzeigeeinheit, zum Beispiel die Anzeigeeinheit eines Smartphones, oder eine mit dem Benutzerendgerät leitungsgebunden oder leitungslos verbundene Anzeigeeinheit, zum Beispiel einen Bildschirm eines Terminals, handeln. Beim Betrieb des Systems wird mittels der Anzeigeeinheit und unter Kontrolle des Benutzerendgeräts sowie auf Basis der Konfigurationsdaten eine Darstellung des jeweiligen Einzelhandelsprodukts in der jeweils konfigurierten Ausführungsform entsprechend der Konfigurationsdaten angezeigt. Diese Ausführungsform des Systems bzw. des Verfahrens hat den Vorteil, dass dem Benutzer unmittelbar das ursprünglich ausgewählte Einzelhandelsprodukt in der jeweils konfigurierten Ausführungsform angezeigt wird. Der Benutzer erhält damit unmittelbar einen Eindruck, ob das jeweilige Einzelhandelsprodukt in der konfigurierten Ausführungsform seinen Wünschen entspricht. Optional kann die Anzeige auch in einer Art und Weise erfolgen, bei der das jeweilige Einzelhandelsprodukt positionsgerecht auf den im Rahmen des Verfahrens mittels einer Kamera aufgenommenen Körper des Benutzers projiziert wird. Bei einer Bluse oder dergleichen erhält die Kundin damit unmittelbar einen optischen Eindruck von der Bluse im getragenen Zustand und kann entscheiden, ob ihr diese in der ausgewählten Konfiguration zusagt.

Bei einer nochmals weiteren Ausführungsform des Systems sowie des Verfahrens zum Betrieb des Systems sind mittels des Benutzerendgeräts und aufgrund einer an dem Benutzerendgerät vorgenommenen Bedienhandlung die Konfigurationsdaten an einen lokalen Empfänger übermittelbar bzw. werden an einen solchen lokalen Empfänger übermittelt. Der Vorteil dieser Variante besteht darin, dass mit der Übermittlung der Konfigurationsdaten an den lokalen Empfänger, also an ein entsprechendes Empfangsgerät im jeweiligen Einzelhandelsgeschäft oder dessen unmittelbarer Umgebung, Bedienpersonal auf die jeweilige Auswahl und Konfiguration des Benutzers aufmerksam wird. Mittels der durch die Bedienhandlung ausgelösten Übermittlung der Konfigurationsdaten an den lokalen Empfänger kann der Benutzer zum Beispiel das jeweils ausgewählte Einzelhandelsprodukt in der konfigurierten Ausführungsform anfordern, so dass ihm dieses vom Bedienpersonal gebracht werden kann. Dann hat der Benutzer die Möglichkeit, das jeweilige Produkt in der konfigurierten Ausführungsform zu betrachten, zu befühlen und so weiter und kann auf dieser Basis die Kaufentscheidung fällen.

Bei einer nochmals weiteren Ausführungsform des Systems sowie des Verfahrens zum Betrieb des Systems ist mittels des Benutzerendgeräts und aufgrund einer an dem Benutzerendgerät vorgenommenen Bedienhandlung ein sofortiges Mitnehmen des jeweiligen Einzelhandelsprodukts oder dessen Versand an eine mittels des Benutzerendgeräts an die Datenbasis übermittelte Adresse auswählbar oder wird mittels des Benutzerendgeräts sowie einer Bedienhandlung ausgewählt. Wenn der Benutzer das sofortige Mitnehmen des jeweiligen Einzelhandelsprodukts auswählt, laufen automatisch die folgenden Verfahrensschritte ab: Wenn der Benutzer keine weitere spezielle Konfiguration des Einzelhandelsprodukts vorgenommen hat und sich der Wunsch, dieses zu kaufen und mitzunehmen auf dasjenige Einzelhandelsprodukt bezieht, welches der Benutzer bereits in Händen hält oder in seiner unmittelbaren Umgebung abgelegt hat, wird dieses im Zusammenhang mit der Auslösung der elektronischen Bezahlung aus dem Warenbestand ausgebucht, so dass der Benutzer mit dem jeweiligen Einzelhandelsprodukt das Geschäft unmittelbar verlassen kann. Wenn der Benutzer eine spezielle Konfiguration vorgenommen hat und sich noch nicht im Besitz des Einzelhandelsprodukts in der konfigurierten Ausführungsform befindet, wird ihm dieses durch Bedienpersonal aufgrund zuvor an den lokalen Empfänger übermittelter Konfigurationsdaten gebracht und in diesem Zusammenhang, zum Beispiel aufgrund einer weiteren ausdrücklichen Bestätigung des Benutzers, erfolgt das Ausbuchen aus dem Warenbestand und die Auslösung der elektronischen Bezahlung. Wenn der Benutzer den Versand des jeweiligen Einzelhandelsprodukts an eine bestimmte Adresse auswählt, laufen automatisch die folgenden Verfahrensschritte ab: Die Konfigurationsdaten werden zusammen mit der jeweiligen Adresse an eine Versandabteilung oder einen Versanddienstleister weitergeleitet, so dass durch diese bzw. diesen der Versand des jeweiligen Einzelhandelsprodukts in der konfigurierten Ausführungsform erfolgt. Im Zusammenhang mit der Bereitstellung des Produkts zum Versand oder spätestens im Zusammenhang mit dem Versand wird die elektronische Bezahlung ausgelöst. Die Adressdaten gibt der Benutzer dabei auf eine im Rahmen des Verfahrens erfolgende Abfrage ein und die Adressdaten werden zusammen mit den Konfigurationsdaten weitergeleitet.

Vorteilhaft ist bei einem System der hier und im Folgenden beschriebenen Art sowie einem Verfahren zum Betrieb eines derartigen Systems vorgesehen, dass das Benutzerendgerät Mittel zum berührungslosen Erfassen einer jeweiligen Warenkennzeichnung unterschiedlicher Transpondertypen umfasst. Bekanntlich wird für das Auslesen einer mittels eines Transponders codierten Kennung, die im Rahmen der hier vorgeschlagenen Neuerung als Warenkennzeichnung fungiert, von einem dafür vorgesehenen Lesegerät eine elektromagnetische Welle ausgesandt, welche - kurz gefasst und in an sich bekannter Art und Weise - den Transponder aktiviert und zum Aussenden der jeweiligen Kennung führt. Unterschiedliche Transpondertypen arbeiten dabei in unterschiedlichen Frequenzbereichen, so dass bisher zum Auslesen der Kennung eines bestimmten Transpondertyps ein genau für diesen Transpondertyp bestimmtes Lesegerät erforderlich war. Indem das Benutzerendgerät Mittel zum berührungslosen Erfassen einer jeweiligen Warenkennzeichnung unterschiedlicher Transpondertypen umfasst, werden solche spezifischen Lesegeräte entbehrlich. Zu den Mitteln zum berührungslosen Erfassen von Warenkennzeichnungen unterschiedlicher Transpondertypen gehören einerseits eine Antenne oder mehrere Antennen, welche ein Aussenden und ein Empfangen elektromagnetischer Wellen in den von den unterschiedlichen Transpondertypen genutzten Frequenzbereichen, insbesondere HF (13,56 Mhz; EN 300 330) und UHF (860 MHz bis 960 MHz; EN 302 208), erlaubt bzw. erlauben, und andererseits eine Verarbeitungseinheit, also zum Beispiel ein Mikrocontroller mit einer in Soft-, Firm- und/oder Hardware codierten Funktionalität zum Aussenden und Empfangen elektromagnetischer Wellen in den jeweils notwendigen Frequenzbereichen und zum Auswerten der dabei jeweils empfangenen Informationen (Kennung; Warenkennzeichnung).

Bei einer zusammenhängenden Erfassung einer Mehrzahl von Warenkennzeichnungen, zum Beispiel bei einer Erfassung von in einem Warenkorb oder dergleichen platzierten Einzelhandelsprodukten, erfolgt bei einer optionalen Ausführungsform des Systems und des Verfahrens zu dessen Betrieb eine Mehrfacherkennung der jeweiligen Einzelhandelsprodukte (jedes ausgewählte Produkt wird einzeln erkannt und die Gesamtheit der Erkennungen ergibt die Mehrfacherkennung). Mittels des Benutzerendgeräts ist bei dem System sukzessive für alle von der Mehrfacherkennung erfassten Einzelhandelsprodukte eine Konfiguration und eine elektronische Bezahlung des jeweiligen Einzelhandelsprodukts auswählbar bzw. bzw. wird bei dem Verfahren ausgewählt. Bei einer solchen Mehrfacherkennung profitiert der Kunde für die Gesamtheit der jeweils ausgewählten Einzelhandelsprodukte von den oben skizzierten Vorteilen.

Als Benutzerendgerät zur Verwendung in dem hier und im Folgenden beschriebenen System oder Verfahren kommen bevorzugt ein vom Benutzer mitgeführtes Smartphone oder ein im jeweiligen Einzelhandelsgeschäft platziertes Terminal in Betracht.

Insgesamt ist die hier vorgestellte Erfindung damit auch ein Verfahren zum Betrieb eines hier und im Folgenden beschriebenen Systems, nämlich ein Verfahren zum Betrieb eines Systems zur Auswahl und zum elektronischen Bezahlen von Produkten des Einzelhandels, wobei zum Auswählen und Bezahlen zumindest eines Einzelhandelsprodukts mittels eines Benutzerendgeräts eine Warenkennzeichnung des oder jedes jeweiligen Einzelhandelsprodukts erfasst wird, wobei die erfasste Warenkennzeichnung mittels des Benutzerendgeräts an eine Datenbasis der oben beschriebenen Art übermittelt wird, woraufhin als Antwort auf die Übermittlung der Warenkennzeichnung zu der Warenkennzeichnung passende Produktdaten an das Benutzerendgerät übermittelt werden, wobei das Einzelhandelsprodukt oder eines der Einzelhandelsprodukte, dessen Warenkennzeichnung erfasst wurde, anhand der empfangenen Produktdaten mittels einer oder mehrerer an dem Benutzerendgerät vorgenommenen Bedienhandlungen konfiguriert wird und entsprechend einer jeweiligen Konfiguration Konfigurationsdaten generiert werden und wobei mittels des Benutzerendgeräts aufgrund einer an dem Benutzerendgerät vorgenommenen Bedienhandlung eine elektronische Bezahlung des jeweiligen Einzelhandelsprodukts in der jeweils konfigurierten Ausführungsform entsprechend der Konfigurationsdaten ausgelöst wird.

Schließlich ist die hier vorgestellte Erfindung auch ein Benutzerendgerät mit Mitteln zur Verwendung in einem System und/oder mit Mitteln zur Verwendung in einem Verfahren der hier und im Folgenden beschriebenen Art. Als Benutzerendgerät fungiert zum Beispiel ein vom Benutzer mitgeführtes Smartphone oder dergleichen oder ein im Einzelhandelsgeschäft platziertes Terminal. Zu den Mitteln zur Verwendung in dem System oder in dem Verfahren gehören ein Computerprogramm zur Implementation der auf dem Benutzerendgerät ablaufenden Verfahrensschritte sowie ein Mikroprozessor oder dergleichen zur Ausführung des Computerprogramms und ein Speicher, in den das Computerprogramm geladen ist. Das Computerprogramm umfasst demnach eine Funktion zum Erfassen einer Warenkennzeichnung mittels einer von dem Benutzerendgerät umfassten Sensorik (Kamera, RFID-Empfänger, NFC-Schnittstelle usw.) und zum Übermitteln der erfassten Warenkennzeichnung an eine Datenbasis (z.B. Internetschnittstelle). Das Computerprogramm umfasst des Weiteren eine Implementation einer Benutzeroberfläche, insbesondere eine Benutzeroberfläche für einen berührungsempfindlichen Bildschirm (Touchpad), welche Bedienhandlungen zum Konfigurieren des jeweils ausgewählten Produkts auf Basis von zuvor empfangenen (z.B. über Internet) Produktdaten erlaubt. Das Computerprogramm umfasst darüber hinaus eine Funktion zum Generieren und zum Übermitteln (z.B. über Internet) von die jeweils vorgenommene Konfiguration codierenden Konfigurationsdaten. Schließlich umfasst das Computerprogramm auch eine Funktion und eine Implementation einer Benutzeroberfläche zum Auslösen einer elektronischen Bezahlung des jeweiligen Einzelhandelsprodukts in der jeweils konfigurierten Ausführungsform entsprechend der Konfigurationsdaten. Dafür wird, wie dies beim elektronischen Bezahlen grundsätzlich an sich bekannt ist, eine kommunikative Verbindung zwischen dem Benutzerendgerät und einem Dienstleister zum elektronischen Bezahlen, zum Beispiel einer Bank, aufgebaut, insbesondere über Internet. Der jeweilige Zahlbetrag ergibt sich dabei aufgrund der Konfigurationsdaten oder der ursprünglich erfassten Warenkennzeichnung und der Konfigurationsdaten und wird durch das System bereitgestellt.

Die Erfindung ist damit auch ein Computerprogramm der oben skizzierten Art mit durch einen Computer ausführbaren Programmcodeanweisungen und andererseits ein Speichermedium mit einem derartigen Computerprogramm sowie schließlich auch ein Benutzerendgerät mit einer Verarbeitungseinheit in Form von oder nach Art eines Mikroprozessors und einem Speicher, in den als Mittel zur Durchführung des Verfahrens und seiner Ausgestaltungen ein solches Computerprogramm geladen oder ladbar ist.

Der Vorteil der Erfindung und ihrer Ausgestaltungen besteht neben den oben eher aus dem Blickwinkel des Kunden betrachteten Vorteilen auch für den Einzelhändler darin, dass der Erwerb einzelner oder mehrerer Einzelhandelsprodukte für den Kunden einfacher wird. Ein Einzelhändler, welcher ein System der hier vorgeschlagenen Art einsetzt und seinen Kunden die damit verbundenen Vorteile anbietet, darf folglich auf einen gesteigerten Umsatz hoffen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- Fig. 1: eine schematisch vereinfachte Darstellung einer Ausführungsform eines Systems zum Auswählen und elektronischen Bezahlen von Produkten des Einzelhandels,
- Fig. 2: eine schematisch vereinfachte Darstellung eines Verfahrens zum Auswählen und elektronischen Bezahlen von Produkten des Einzelhandels,
- Fig. 3: eine mittels des Systems und im Rahmen des Verfahrens ansteuerbare Anzeigeeinheit mit einer Momentaufnahme einer Benutzeroberfläche,
- Fig. 4: eine Ausführungsform des Systems gemäß Fig. 1 und
- Fig. 5: eine Ausführungsform eines von dem System zumindest temporär umfassten und im Rahmen des Verfahrens verwendeten Benutzerendgeräts.

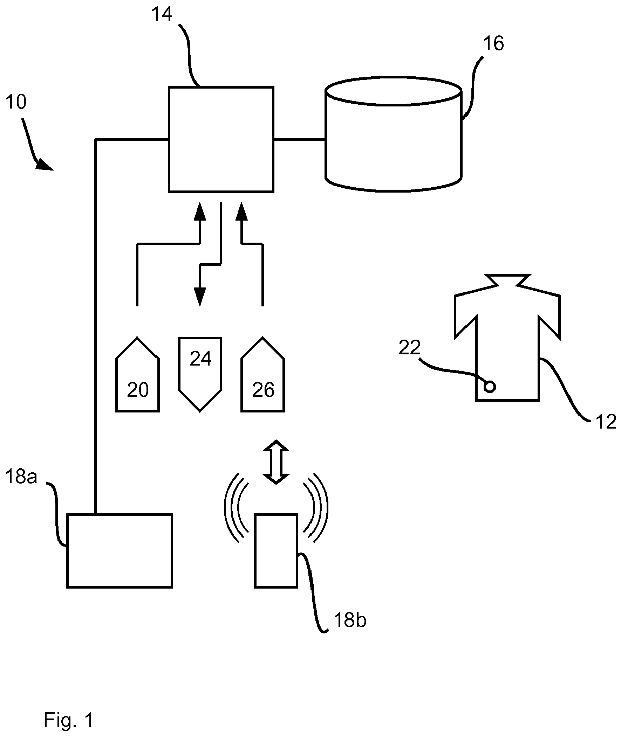

Die Darstellung in Figur 1 zeigt in schematisch vereinfachter Form ein System 10 der hier vorgeschlagen Art, nämlich ein System 10 zum Auswählen und elektronischen Bezahlen von Produkten 12 des Einzelhandels. Exemplarisch ist als mittels des Systems 10 auswählbares sowie mittels des Systems 10 bezahlbares Produkt 12 (Einzelhandelsprodukt) eine Bluse gezeigt. Das Auswählen und Bezahlen erfolgt gemäß einem mittels des Systems 10 ausgeführten Verfahren.

Das System 10 umfasst einen Computer 14 sowie eine Datenbasis 16 mit Daten bezüglich einer Vielzahl von Einzelhandelsprodukten 12, also zum Beispiel mit Daten bezüglich weiterer Oberbekleidungsstücke oder dergleichen. Mit dem System 10, speziell mit dem von dem System 10 umfassten Computer 14, ist eine Mehrzahl von Benutzerendgeräten 18a, 18b kommunikativ verbindbar. Ein mit dem System 10 kommunikativ verbundenes Benutzerendgerät 18a, 18b wird selbst als von dem System 10 zumindest temporär umfasst angesehen. Die kommunikative Verbindung zu jeweils einem Benutzerendgerät 18a, 18b kann in Form einer leitungsgebundenen kommunikativen Verbindung oder einer leitungslosen kommunikativen Verbindung bestehen. Beide Verbindungsarten sind für das hier vorgeschlagene System 10 wie auch für das hier vorgeschlagene Verfahren gleichwertig, so dass auf die jeweilige Verbindungsart im Folgenden nicht mehr hingewiesen wird. Als Benutzerendgerät 18a kommt ein in einem Einzelhandelsgeschäft platziertes Terminal 18a in Betracht. Zusätzlich oder alternativ kommt als Benutzerendgerät 18b auch ein von einem Kunden des Einzelhandelsgeschäfts mitgeführtes Smartphone 18b oder dergleichen in Betracht. Die Anbindung eines Terminals 18a an das System 10, insbesondere an den von dem System 10 umfassten Computer 14, erfolgt üblicherweise auf leitungsgebundenem Wege. Die Anbindung eines Smartphones 18b oder mehrerer Smartphones 18b oder dergleichen an das System 10, insbesondere an den von dem System 10 umfassten Computer 14, erfolgt auf leitungslosem Wege unter Verwendung eines hier nicht gezeigten, an sich bekannten Empfängers.

Beim Betrieb des Systems 10 wird mittels des Benutzerendgeräts 18a, 18b eine Warenkennzeichnung 20 eines jeweils interessierenden Produkts 12 erfasst. Beim gezeigten Beispiel wird insoweit davon ausgegangen, dass eine Kundin sich zum Beispiel für ein Einzelhandelsprodukt 12 in Form einer Bluse 12 interessiert. Zur Illustration von deren Warenkennzeichnung 20 ist exemplarisch ein Transponder 22 gezeigt. Genauso kann das Produkt 12 als Warenkennzeichnung zum Beispiel einen Barcode oder dergleichen umfassen. Die Erfassung der Warenkennzeichnung 20 erfolgt mittels des jeweiligen Benutzerendgeräts 18a, 18b. Bei Verwendung des Terminals 18a oder eines von mehreren Terminals 18a in dem Einzelhandelsgeschäft als Benutzerendgerät 18a, 18b erfolgt die Erfassung der Warenkennzeichnung 20 mittels einer von dem Terminal 18a umfassten Sensorik (Kamera, RFID-Empfänger, NFC-Schnittstelle usw.). Die Bluse12 wird dafür zum Beispiel auf eine zur Erfassung der Warenkennzeichnung 20 vorgesehene Fläche gelegt oder vor eine solche Fläche gehalten. Bei Verwendung eines Smartphones 18b als Benutzerendgerät 18a, 18b erfolgt die Erfassung der Warenkennzeichnung 20 mittels einer von dem jeweiligen Smartphone 18b umfassten Sensorik. Auch hier kommen als Ausführungsform einer solchen Sensorik eine Kamera, ein RFID-Empfänger, eine NFC-Schnittstelle usw. in Betracht. Das Smartphone 18b wird zur Erfassung der Warenkennzeichnung 20 über die Bluse 12 geführt oder in die Nähe der Bluse 12 gehalten.

Mittels des jeweiligen Benutzerendgeräts 18a, 18b wird die erfasste Warenkennzeichnung 20 an die Datenbasis 16 übermittelt, bei der gezeigten Situation indem die Warenkennzeichnung 20 an den Computer 14, dem die Datenbasis 16 zugeordnet ist, übermittelt wird. Aufgrund der Übermittlung der Warenkennzeichnung 20 an die Datenbasis 16 erfolgt mittels des Systems 10, speziell mittels des von dem System 10 umfassten Computers 14, eine Übermittlung von Produktdaten 24, welche zu der zuvor übermittelten Warenkennzeichnung 20 passen und aus der Datenbasis 16 stammen. Die Daten der Warenkennzeichnung 20 umfassen zumindest eine Spezifikation, die das ausgewählte Produkt 12 als Bluse 12 eines bestimmten Herstellers und/oder als Bluse 12 eines bestimmten Designs usw. kennzeichnet. Zu einer solchen Warenkennzeichnung 20 passende Produktdaten 24 sind zum Beispiel Daten bezüglich verfügbarer Farben und/oder bezüglich verfügbarer Konfektionsgrößen.

Aufgrund des Erhalts solcher für die zuvor ausgewählte Bluse 12 spezifischer Produktdaten 24 ist im Weiteren eine Konfiguration der Bluse 12 oder des jeweils ausgewählten Produkts 12 möglich. Dies erfolgt mittels einer oder mehrerer an dem jeweiligen Benutzerendgerät 18a, 18b vorgenommener Bedienhandlungen, zum Beispiel in Form von manuellen Eingaben der Kundin oder von auf Anweisung der Kundin handelndem Bedienpersonal.

Die Art und Weise, wie mittels des Systems 10 und im Rahmen des Verfahrens solche Bedienhandlungen zur Konfiguration der Bluse 12 oder des jeweiligen Produkts 12 ausgeführt werden, ist grundsätzlich beliebig und es kommen diverse Implementationsmöglichkeiten für diesen Aspekt der Funktionalität des Systems 10 in Betracht. Zum Beispiel kann, wenn die Produktdaten 24 unterschiedliche Farben codieren, in denen die ausgewählte Bluse 12 erhältlich ist, jede Farbe mit einer eindeutigen Kennung (1 = rot, 2 = grün, 3 = blau, usw.) versehen werden, so dass die Konfiguration durch Eingabe der jeweiligen Kennung erfolgt. Alternativ kann bei einer Konfigurationsmöglichkeit bezüglich der Farbe auf dem jeweiligen Benutzer Endgerät 18a, 18b eine Darstellung der jeweiligen Bluse 12 in den verfügbaren Farben erfolgen, so dass die Konfiguration vorgenommen werden kann, indem auf einem berührungsempfindlichen Bildschirm des Benutzerendgeräts 18a, 18b die Darstellung mit der gewünschten Farbe angetippt wird. Dasselbe gilt entsprechend für andere Konfigurationsmöglichkeiten, zum Beispiel Konfektionsgrößen, Designs, Applikationen usw.

Aufgrund der Konfiguration, die einzelne oder mehrere derartige Bedienhandlungen umfassen oder erfordern kann, resultieren Konfigurationsdaten 26. Diese sind entweder durch das jeweilige Benutzerendgerät 18a, 18b generierbar oder werden zum Beispiel mittels des Computers 14 generiert, indem dieser dafür von dem jeweiligen Benutzerendgerät 18a, 18b erhaltene und die jeweilige Konfiguration codierende Daten berücksichtigt. In der Darstellung in Figur 1 ist ohne Verzicht auf eine weitergehende Allgemeingültigkeit die Situation gezeigt, dass das Benutzerendgerät 18a, 18b die Konfigurationsdaten 26 generiert und diese an den Computer 14 gesandt werden.

Zum Abschluss des Erwerbs der Bluse 12 in der jeweils konfigurierten Ausführungsform entsprechend der Konfigurationsdaten 26 wird mittels des Benutzerendgeräts 18a, 18b aufgrund einer an dem Benutzerendgerät 18a, 18b vorgenommenen Bedienhandlung eine elektronische Bezahlung der Bluse 12 oder des jeweiligen Produkts 12 ausgelöst. Die Bedienhandlung kann zum Beispiel in Form einer Freigabe der Übermittlung der Konfigurationsdaten 26 innerhalb des Systems 10, insbesondere einer Freigabe der Übermittlung der Konfigurationsdaten 26 an den von dem System 10 umfassten Computer 14, erfolgen. Ein Hinweis auf dem Monitor des Benutzerendgeräts 18a, 18b informiert den Kunden dann darüber, dass die Freigabe der Übermittlung der Konfigurationsdaten 26 den Erwerb der Bluse 12 auslöst. Alternativ kann auch vorgesehen sein, dass im Anschluss an die Übermittlung der Konfigurationsdaten 26 in dem System 10 auf dem Monitor des Benutzerendgeräts 18a, 18b eine durch das System 10 ausgelöste Mitteilung und Abfrage zur Bestätigung des Kaufwunsches erscheint. Die elektronische Bezahlung der Bluse 12 umfasst im Weiteren die grundsätzlich an sich bekannten und im Rahmen einer elektronischen Bezahlung ablaufenden Schritte. Sobald ein insoweit initiierter Prozess erfolgreich abgeschlossen ist und das System 10 eine Bestätigung zum Beispiel von einem Bankenrechner erhalten hat, erfolgt mittels des Systems 10 ein Ausbuchen der erworbenen Bluse 12 aus dem Datenbestand des jeweiligen Einzelhandelsgeschäfts. Dieser wird zum Beispiel als Datenbank in der Datenbasis 16 vorgehalten. Indem die erworbene Bluse 12 aus dem Datenbestand ausgebucht ist, kann die Kundin das Einzelhandelsgeschäft verlassen, ohne dass Sicherungseinrichtungen, die ansonsten zur Vermeidung von Diebstahl vorgesehen sind, ansprechen.

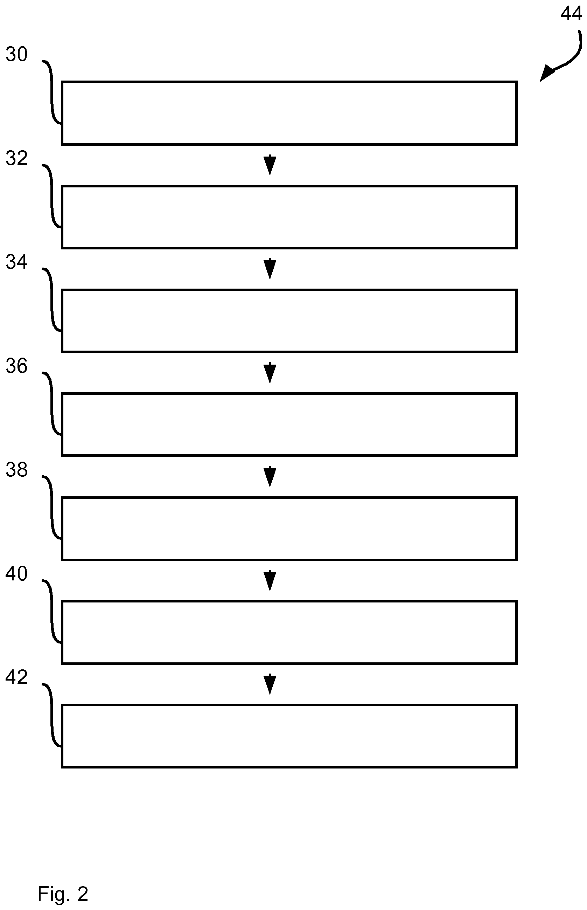

Die Darstellung in Figur 2 zeigt das soeben in Bezug auf das System 10 erläuterte Verfahren nochmals in Form einzelner Verfahrensschritte. Danach wählt eine Kundin in einem Einzelhandelsgeschäft ein Produkt 12, zum Beispiel eine Bluse 12, aus. In einem ersten Verfahrensschritt 30 wird mittels eines Benutzerendgeräts 18a, 18b, zum Beispiel mittels eines in dem Einzelhandelsgeschäft vorhandenen Terminals 18a oder mittels eines Smartphones 18b oder dergleichen der Kundin, eine Warenkennzeichnung 20 des jeweiligen Produkts 12 erfasst. In einem zweiten Verfahrensschritt 32 wird die erfasste Warenkennzeichnung 20 mittels des Benutzerendgeräts 18a, 18b mittelbar oder unmittelbar an die von dem System 10 umfasste Datenbasis 16 übermittelt. In einem dritten Verfahrensschritt 34 werden in der Datenbasis 16 anhand der empfangenen Warenkennzeichnung 20 zu dieser passende Produktdaten 24 ermittelt. In einem vierten Verfahrensschritt 36 werden die zu der Warenkennzeichnung 20 passenden Produktdaten 24 an das verwendete Benutzerendgerät 18a, 18b übermittelt. In einem fünften Verfahrensschritts 38 wird das Produkt 12, dessen Warenkennzeichnung 20 erfasst wurde, anhand der empfangenen Produktdaten 24 mittels einer oder mehrerer an dem Benutzerendgerät 18a, 18b vorgenommener Bedienhandlungen konfiguriert und es werden entsprechend einer jeweiligen Konfiguration Konfigurationsdaten 26 generiert. In einem sechsten Verfahrensschritt 40 wird mittels des Benutzerendgeräts 18a, 18b aufgrund einer an dem Benutzerendgerät 18a, 18b vorgenommenen Bedienhandlung eine elektronische Bezahlung des jeweiligen Produkts 12 in der jeweils konfigurierten Ausführungsform entsprechend der Konfigurationsdaten 26 ausgelöst. In einem üblicherweise anschließenden siebenten Verfahrensschritt 42 wird das erworbene Produkt 12 aus dem Datenbestand des Einzelhandelsgeschäfts ausgebucht. Im Zusammenhang mit der Auslösung der Bezahlung oder im Zusammenhang mit dem Ausbuchen des Produkts 12 aus dem Datenbestand des Einzelhandelsgeschäfts erfolgt auch das Ausdrucken oder Erzeugen einer Quittung. Das Ausdrucken erfolgt mittels des Terminals 18a oder einer sonstigen dafür vorgesehenen Einrichtung des Einzelhandelsgeschäfts und zwar unabhängig davon, ob im Rahmen der vorangegangenen Verfahrensschritte 30-42 das Terminal 18a oder das Smartphone 18b als Benutzerendgerät 18a, 18b verwendet wurde. Die Quittung kann auch in elektronischer Form erzeugt werden und mittels des Systems 10 auf leitungslosem Wege an das Smartphone 18b übermittelt werden.

Die Gesamtheit der Verfahrensschritte 30-42 beschreibt in vereinfachter Form eine Funktionalität eines beim Betrieb des Systems 10 ausgeführten Computerprogramms 44. Die Darstellung der Verfahrensschritte 30-42 in Figur 2 kann insoweit als schematisch vereinfachte Darstellung eines Computerprogramms 44 mit einer Implementation des hier vorgeschlagenen und beim Betrieb des Systems 10 ausgeführten Verfahrens aufgefasst werden. Teile des Computerprogramms 44 laufen auf dem von dem System 10 umfassten Computer 14 oder einer vergleichbaren, gegebenenfalls auch verteilten Verarbeitungseinheit ab. Andere Teile des Computerprogramms 44 laufen auf dem Benutzerendgerät 18a, 18b, also zum Beispiel dem Terminal 18a oder dem Smartphone 18b der Kundin ab. Zur Verwendung eines Smartphones 18b mit dem System 10 und im Rahmen des Verfahrens erfolgt eine Installation einer entsprechenden Teilfunktionalität des Computerprogramms 44 auf dem Smartphone 18b.

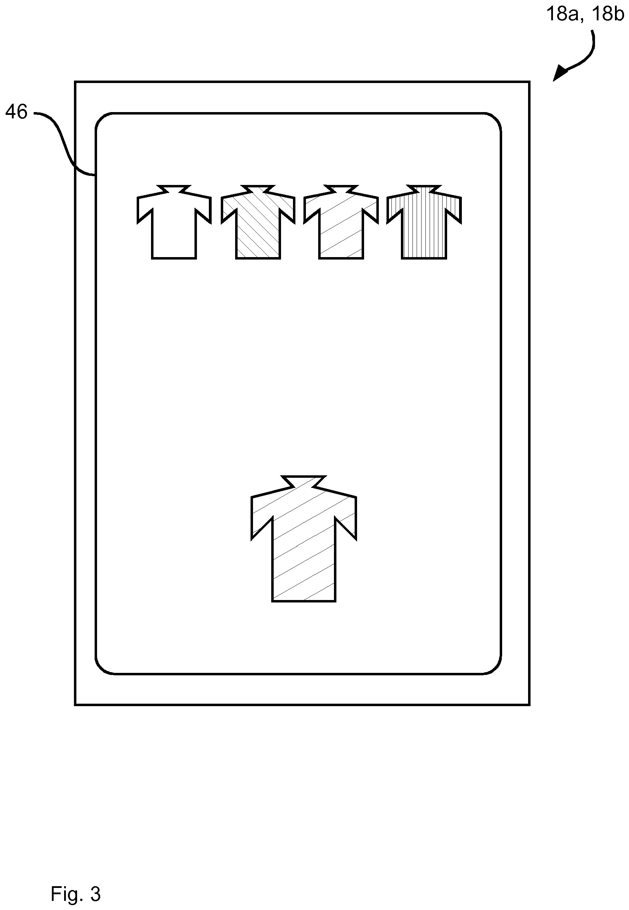

Die Darstellung in Figur 3 zeigt in schematisch vereinfachter Form eine mittels des Benutzerendgeräts 18a, 18b ansteuerbare Anzeigeeinheit 46. Bei der Anzeigeeinheit 46 kann es sich zum Beispiel um eine von dem Benutzerendgerät 18a, 18b selbst umfasste Anzeigeeinheit 46 handeln, so dass daraus die Ansteuerbarkeit der Anzeigeeinheit 46 resultiert. Grundsätzlich kommt als Anzeigeeinheit 46 aber auch eine von dem Benutzerendgerät 18a, 18b unabhängige, aber auf leitungslosem oder leitungsgebundenem Wege ansteuerbare Anzeigeeinheit 46, zum Beispiel ein in dem Einzelhandelsgeschäft aufgestellter Monitor, in Betracht.

Im Weiteren zeigt die Darstellung in Figur 3 in schematisch vereinfachter Form, dass mittels der Anzeigeeinheit 46 und unter Kontrolle des Benutzerendgeräts 18a, 18b sowie auf Basis der Konfigurationsdaten 26 eine Anzeige des jeweiligen Einzelhandelsprodukts 12 in der jeweils konfigurierten Ausführungsform entsprechend der Konfigurationsdaten 26 anzeigbar ist. Im oberen Bereich des exemplarisch gezeigten Bildschirminhalts der Anzeigeeinheit 46 ist die Bluse 12, deren Warenkennzeichnung 20 ursprünglich erfasst und an die Datenbasis 16 übermittelt wurde, in vier verschiedenen Farben gezeigt, wobei die Farben aufgrund der aus der Datenbasis 16 zu der Warenkennzeichnung 20 erhaltenen Produktdaten 24 resultieren (die Produktdaten 24 codieren, dass das durch die erfasste Warenkennzeichnung 20 als Bluse 12 codierte Produkt 12 in vier verschiedenen Farben erhältlich ist und um welche Farben, Muster usw. es sich dabei handelt). Im unteren Bereich des exemplarisch gezeigten Bildschirminhalts der Anzeigeeinheit 46 ist die Bluse 12 bereits in einer der gemäß der Produktdaten 24 zur Verfügung stehenden Farben gezeigt. Diese Anzeige ist das Ergebnis der mittels des Benutzerendgeräts 18a, 18b vorgenommenen Konfiguration der Bluse. In der dargestellten Situation kann - sofern als Anzeigeeinheit 46 ein berührungsempfindlicher Bildschirm fungiert - diese Konfiguration zum Beispiel erfolgen, indem auf eine der im oberen Bereich gezeigten Darstellungen getippt wird. Dieses Tippen ist ein Beispiel für eine zur Konfiguration des jeweiligen Produkts 12 an dem Benutzerendgerät 18a, 18b vorgenommene Bedienhandlung. Daten, die das jeweilige Produkt 12 in der konfigurierten Form codieren, sind die im Rahmen der Konfiguration generierten Konfigurationsdaten 26.

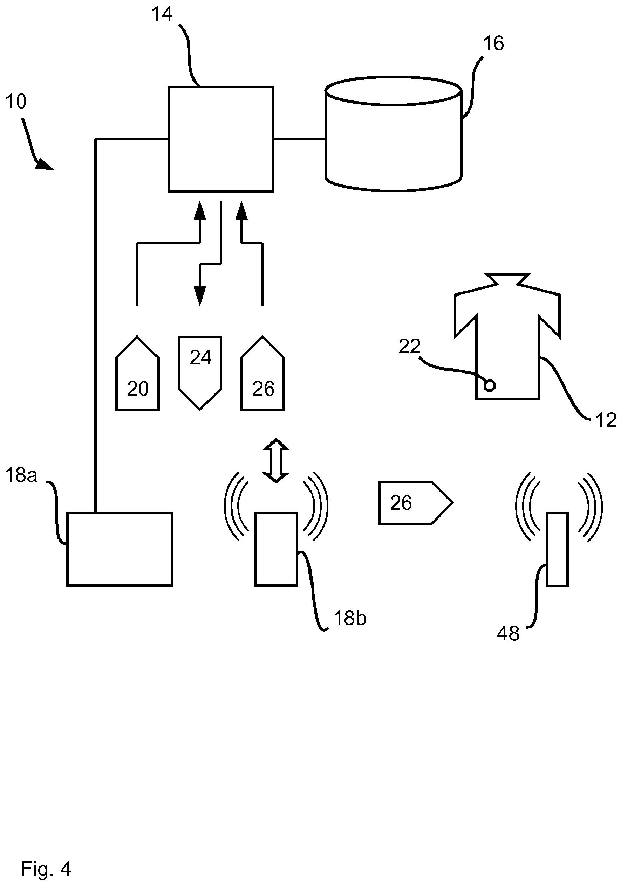

Die Darstellung in Figur 4 zeigt auf Basis der Darstellung in Figur 1 eine Ausführungsform eines Systems 10 gemäß Figur 1, welches zumindest einen lokalen Empfänger 48 für Konfigurationsdaten 26 umfasst. Der Empfang der Konfigurationsdaten 26 kann auf leitungsgebundenem oder leitungslosem Wege erfolgen (leitungsgebundene oder leitungslose Übertragung vom Terminal 18a; leitungslose Übertragung vom Smartphone 18b). Indem bei der in Figur 4 gezeigten Ausführungsform des Systems 10 mittels des Benutzerendgeräts 18a, 18b und aufgrund einer an dem Benutzerendgerät 18a, 18b vorgenommenen Bedienhandlung die Konfigurationsdaten 26 an den lokalen Empfänger 48 übermittelt werden, sind die Konfigurationsdaten 26, auf die bisher ausschließlich die Kundin auf ihrem Smartphone 18b Zugriff hatte, auch am Ort des lokalen Empfängers 48 verfügbar. Durch Übermittlung der Konfigurationsdaten 26 an den lokalen Empfänger 48 kann die Kundin zum Beispiel Personal des Einzelhandelsgeschäfts um Hilfe bitten oder konkret eine den Konfigurationsdaten 26 entsprechende Bluse 12 anfordern, die ihr daraufhin durch das Bedienpersonal gebracht werden kann.

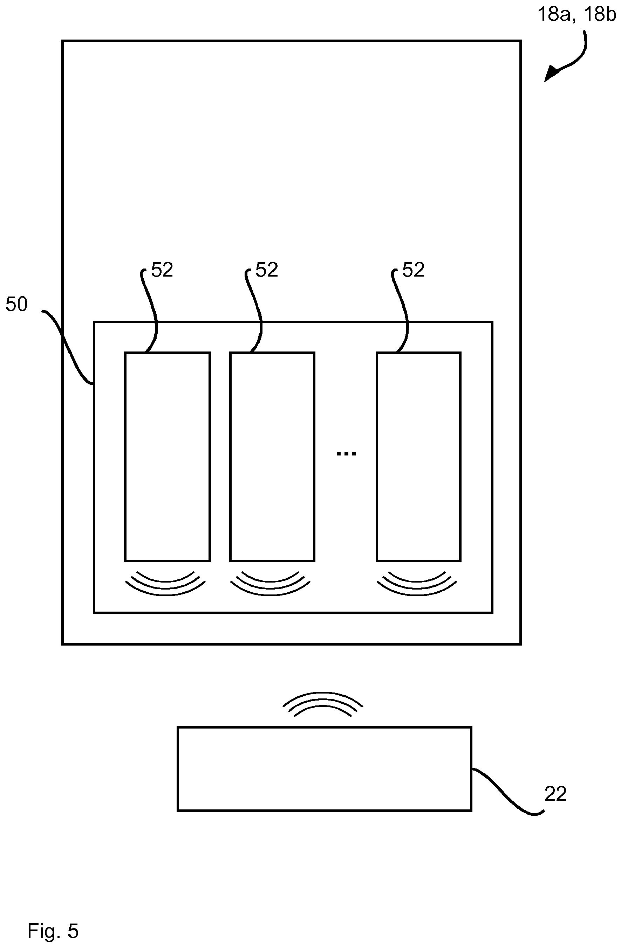

Figur 5 zeigt eine weitere (Figur 3) schematisch vereinfachte Darstellung einer Ausführungsform eines zusammen mit dem System 10 und im Rahmen des Verfahrens verwendbaren Benutzerendgeräts 18a, 18b. Dieses umfasst Mittel 50 zum Erfassen einer jeweiligen Warenkennzeichnung 20 unterschiedlicher Transpondertypen, nämlich zum Beispiel eine Mehrzahl von Empfangseinheiten 52, wobei jede einzelne Empfangseinheit 52 zumindest ein Empfangen elektromagnetischer Wellen in einem der von den von den unterschiedlichen Transpondertypen genutzten Frequenzbereiche und/oder gemäß unterschiedlichen Datenformaten, Übertragungsstandards etc. erlaubt.

Optional wird mittels des Systems 10 sowie im Rahmen eines mittels des Systems 10 ausgeführten Verfahrens auch der Zutritt (Eingang und Zutritt) eines Kunden zu angebotenen Dienstleistungen gesteuert. Zum Beispiel kann vorgesehen sein, dass nach einem Erwerb eines Produkts 12 automatisch ein kostenloser Besuch einer Kundentoilette des Einzelhandelsgeschäfts oder einer Toilette außerhalb des Einzelhandelsgeschäfts möglich ist. Der Zutritt zu einer solchen oder ähnlichen Dienstleistung erfolgt ebenfalls mittels des Benutzerendgeräts 18a, 18b, insbesondere einem als Benutzerendgerät 18a, 18b fungierenden Smartphone 18b. Andere Beispiele sind ein Zutritt zu Events aller Art (Konzert, Aufführung, etc.) oder Sport- oder sonstigen Einrichtungen, wie zum Beispiel einem Schwimmbad, einer Kegelbahn, einem Squashcenter und dergleichen. Eine solcher Zutritt kann mittels des hier beschriebenen Systems 10 und Verfahrens auch unabhängig vom Erwerb eines oder mehrerer Produkte 12 freigeschaltet und abgerechnet werden. Eine in einem solchen Szenario vorgenommene Konfiguration bezieht sich zum Beispiel darauf, wie lange an einem bestimmten Wochentag zu einer bestimmten Uhrzeit zum Beispiel in einem Squash Center ein bestimmter Court gebucht wird. Bei anderen Dienstleistungen gilt dies entsprechend. Beim Erwerb von Karten für Kinovorstellungen kann im Rahmen der Konfiguration zumindest der jeweilige Kinofilm und sodann der Wochentag, die Uhrzeit, die Anzahl der Plätze, die Platzkategorie usw. ausgewählt werden.

Einzelne im Vordergrund stehende Aspekte der hier eingereichten Beschreibung lassen sich damit kurz wie folgt zusammenfassen: Angegeben werden ein System 10 und ein Verfahren zum Auswählen und elektronischen Bezahlen von Produkten 12 des Einzelhandels. Das System 10 umfasst eine Datenbasis 16 mit Daten bezüglich einer Vielzahl von Einzelhandelsprodukten 12 und mit dem System 10 ist eine Mehrzahl von Benutzerendgeräten 18a, 18b kommunikativ verbindbar. Mittels eines Benutzerendgeräts 18a, 18b ist eine Warenkennzeichnung 20 eines Einzelhandelsprodukts 12 erfassbar und wird bei Ausführung des Verfahrens erfasst. Die erfasste Warenkennzeichnung 20 ist mittels des Benutzerendgeräts 18a, 18b an die Datenbasis 16 übermittelbar, woraufhin an das Benutzerendgerät 18a, 18b zu der Warenkennzeichnung 20 passende Produktdaten 24 übermittelbar sind. Im Rahmen des Verfahrens wird die erfasste Warenkennzeichnung 20 mittels des Benutzerendgeräts 18a, 18b an die Datenbasis 16 übermittelt und auf die Übermittlung der Warenkennzeichnung 20 werden an das Benutzerendgerät 18a, 18b Produktdaten 24, die in der Datenbasis 16 als zu der Warenkennzeichnung 20 passend ermittelt wurden, übermittelt. Das Einzelhandelsprodukt 12, dessen Warenkennzeichnung 20 erfasst wurde, ist anhand der empfangenen Produktdaten 24 mittels einer oder mehrerer an dem Benutzerendgerät 18a, 18b vorgenommener Bedienhandlungen konfigurierbar und wird im Rahmen des Verfahrens konfiguriert. Dabei sind entsprechend einer jeweiligen Konfiguration Konfigurationsdaten 26 generierbar und werden im Rahmen des Verfahrens generiert. Abschließend ist mittels des Benutzerendgeräts 18a, 18b aufgrund einer an dem Benutzerendgerät 18a, 18b vorgenommenen Bedienhandlung eine elektronische Bezahlung des jeweiligen Einzelhandelsprodukts 12 in der jeweils konfigurierten Ausführungsform entsprechend der Konfigurationsdaten 26 auslösbar und wird bei Ausführung des Verfahrens ausgelöst.

### Bezugszeichenliste

- 10: System
- 12: Produkt / Bluse
- 14: Computer
- 16: Datenbasis
- 18a: Benutzerendgerät, Terminal
- 18b: Benutzerendgerät, Smartphone
- 20: Warenkennzeichnung
- 22: Transponder
- 24: Produktdaten
- 26: Konfigurationsdaten
- 28: -- frei --
- 30-42: Verfahrensschritt
- 44: Computerprogramm
- 46: Anzeigeeinheit
- 48: lokaler Empfänger
- 50: Mittel zum Erfassen einer Warenkennzeichnung
- 52: Empfangseinheit

## Patentansprüche

1. System (10) zum Auswählen und elektronischen Bezahlen von Produkten (12) des Einzelhandels, wobei das System (10) eine Datenbasis (16) mit Daten bezüglich einer Vielzahl von Einzelhandelsprodukten (12) umfasst und
wobei mit dem System eine Mehrzahl von Benutzerendgeräten (18a, 18b) kommunikativ verbindbar ist,
wobei mittels eines Benutzerendgeräts (18a, 18b) eine Warenkennzeichnung (20) eines Einzelhandelsprodukts (12) erfassbar ist,
wobei die erfasste Warenkennzeichnung (20) mittels des Benutzerendgeräts (18a, 18b) an die Datenbasis (16) übermittelbar ist, woraufhin an das Benutzerendgerät (18a, 18b) Produktdaten (24) übermittelbar sind,
wobei das Einzelhandelsprodukt (12), dessen Warenkennzeichnung (20) erfasst wurde, anhand der empfangenen Produktdaten (24) mittels einer oder mehrerer an dem Benutzerendgerät (18a, 18b) vorgenommener Bedienhandlungen konfigurierbar ist und entsprechend einer jeweiligen Konfiguration Konfigurationsdaten (26) generierbar sind
und wobei mittels des Benutzerendgeräts (18a, 18b) aufgrund einer an dem Benutzerendgerät (18a, 18b) vorgenommenen Bedienhandlung eine elektronische Bezahlung des jeweiligen Einzelhandelsprodukts (12) in der jeweils konfigurierten Ausführungsform entsprechend der Konfigurationsdaten (26) auslösbar ist.

2. System (10) nach Anspruch 1, wobei im Zusammenhang mit der Auslösung der elektronischen Bezahlung des jeweiligen Einzelhandelsprodukts (12) dieses in der Datenbasis (16) als bezahlt markierbar ist.

3. System (10) nach Anspruch 1 oder 2, wobei mittels des Benutzerendgeräts (18a, 18b) eine Anzeigeeinheit (46) ansteuerbar ist und wobei mittels der Anzeigeeinheit (46) und unter Kontrolle des Benutzerendgeräts (18a, 18b) sowie auf Basis der Konfigurationsdaten (26) eine Anzeige des jeweiligen Einzelhandelsprodukts (12) in der jeweils konfigurierten Ausführungsform entsprechend der Konfigurationsdaten (26) anzeigbar ist.

4. System (10) nach einem der vorangehenden Ansprüche, wobei mittels des Benutzerendgeräts (18a, 18b) und aufgrund einer an dem Benutzerendgerät (18a, 18b) vorgenommenen Bedienhandlung die Konfigurationsdaten (26) an einen lokalen Empfänger (48) übermittelbar sind.

5. System (10) nach einem der vorangehenden Ansprüche, wobei mittels des Benutzerendgeräts (18a, 18b) und aufgrund einer an dem Benutzerendgerät (18a, 18b) vorgenommenen Bedienhandlung ein sofortiges Mitnehmen des jeweiligen Einzelhandelsprodukts (12) oder dessen Versand an eine mittels des Benutzerendgeräts (18a, 18b) an die Datenbasis (16) übermittelte Adresse auswählbar ist.

6. System (10) nach einem der vorangehenden Ansprüche, wobei das Benutzerendgerät (18a, 18b) Mittel (50) zum Erfassen einer jeweiligen Warenkennzeichnung (20) unterschiedlicher Transpondertypen umfasst.

7. System (10) nach einem der vorangehenden Ansprüche, wobei im Falle einer zusammenhängenden Erfassung einer Mehrzahl von Warenkennzeichnungen (20) eine Mehrfacherkennung der jeweiligen Einzelhandelsprodukte (12) erfolgt und mittels des Benutzerendgeräts (18a, 18b) sukzessive für alle von der Mehrfacherkennung erfassten Einzelhandelsprodukte (12) eine Konfiguration und eine elektronische Bezahlung des jeweiligen Einzelhandelsprodukts (12) auswählbar ist.

8. System (10) nach einem der vorangehenden Ansprüche, wobei als Benutzerendgerät (18a, 18b) ein Smartphone (18b) fungiert.

9. System (10) nach einem der vorangehenden Ansprüche, wobei als Benutzerendgerät (18a, 18b) ein in einem Einzelhandelsgeschäft platziertes Terminal (18a) fungiert.

10. Verfahren zum Betrieb eines Systems (10) nach einem der vorangehenden Ansprüche, wobei zum Auswählen und elektronischen Bezahlen von Produkten (12) des Einzelhandels mittels eines Benutzerendgeräts (18a, 18b) eine Warenkennzeichnung (20) eines Einzelhandelsprodukts (12) erfasst wird,
wobei die erfasste Warenkennzeichnung (20) mittels des Benutzerendgeräts (18a, 18b) an die Datenbasis (16) übermittelt wird, woraufhin an das Benutzerendgerät (18a, 18b) Produktdaten (24) übermittelt werden,
wobei das Einzelhandelsprodukt (12), dessen Warenkennzeichnung (20) erfasst wurde, anhand der empfangenen Produktdaten (24) mittels einer oder mehrerer an dem Benutzerendgerät (18a, 18b) vorgenommener Bedienhandlungen konfiguriert wird und entsprechend einer jeweiligen Konfiguration Konfigurationsdaten (26) generiert werden
und wobei mittels des Benutzerendgeräts (18a, 18b) aufgrund einer an dem Benutzerendgerät (18a, 18b) vorgenommenen Bedienhandlung eine elektronische Bezahlung des jeweiligen Einzelhandelsprodukts (12) in der jeweils konfigurierten Ausführungsform entsprechend der Konfigurationsdaten (26) ausgelöst wird.

11. Benutzerendgerät (18a, 18b) mit Mitteln zur Verwendung in dem System (10) nach einem der Ansprüche 1 bis 9 und/oder mit Mitteln zur Verwendung in dem Verfahren nach Anspruch 10.
